# EUROPÄISCHE PATENTANMELDUNG

(11) **EP 3 315 022 A1**
(43) Veröffentlichungstag der Anmeldung: **02.05.2018**
(21) Anmeldenummer: 16195948.1
(22) Anmeldetag: 27.10.2016
(51) Int. Cl.: A01K 7/02

(54) **TRINKWASSERBRUNNEN FÜR HAUSTIERE**

(71) Anmelder: Cubergreen AG, 8610 Uster (CH)
(72) Erfinder: KELLER, René, 8610 Uster (CH)
(74) Vertreter: Liebetanz, Michael

(57) **Zusammenfassung**

Ein Trinkwasserbrunnen (10) für Haustiere hat eine Trinkschale (20) und einen separaten Funktionseinsatz (30), der eine Steuereinrichtung (45), eine Pumpe (31), eine Pumpenkreislaufleitung (35) und ein zweites induktives Übertragungselement (52) eine einer elektrischen Stromversorgung umfasst. Der Wassereinlass der Pumpenkreislaufleitung (35) reicht in den unteren Bereich der Trinkschale (20). Der Wasserauslass (36) der Pumpenkreislaufleitung (35) ist so angeordnet, um angesaugtes Wasser aus der Trinkschale (20) in diese zurückfliessen zu lassen. Es ist mindestens ein Wasserfilter (33, 34, 43) in der Pumpenkreislaufleitung (35) angeordnet. Das erste (51) der zwei induktiven Übertragungselemente (51, 52), ist der Trinkschale (20) zugeordnet, welches mit elektrischer Energie gespeist wird. Auf der Innenseite der Trinkschale (20) und der Aussenseite des Funktionseinsatzes (30) sind komplementäre Positionierungselemente vorgesehen, so dass bei einem Einsetzen des Funktionseinsatzes (30) in die Trinkschale (20) die beiden induktiven Übertragungselemente (51, 52) in einem Wirkabstand (53) voneinander positioniert sind.

## Beschreibung

### TECHNISCHES GEBIET

Die vorliegende Erfindung betrifft einen Trinkwasserbrunnen für Haustiere mit einer Trinkschale, einer Steuereinrichtung und einer Pumpe, wobei ein Wassereinlass einer Pumpenkreislaufleitung in den unteren Bereich der Trinkschale reicht und ein Wasserauslass der Pumpenkreislaufleitung so angeordnet ist, um angesaugtes Wasser aus der Trinkschale in diese zurückfliessen zu lassen, wobei mindestens ein Wasserfilter in der Pumpenkreislaufleitung angeordnet ist und wobei eine elektrische Stromversorgung vorgesehen ist, um mindestens die Steuereinrichtung und die Pumpe mit elektrischer Energie zu versorgen.

### STAND DER TECHNIK

Aus der US 2014/053781 ist ein solcher Trinkwasserbrunnen für Haustiere mit den oben genannten Merkmalen bekannt, bei dem Wasser aus einer Flasche durch eine Pumpe in eine Trinkschale abgegeben wird. Dabei wird das Wasser aus der Trinkschale ebenfalls durch eine Pumpe angesaugt und durch einen Filter und eine Heiz- oder Kühleinrichtung hindurchgeleitet, um dann durch Abgabedüsen in die Trinkschale abgegeben zu werden. Die Pumpe und Heiz- oder Kühleinrichtung werden durch eine Kombination von Photovoltaischer Zelle und Batterie gespeist.

Aus der DE 202 08 785 U1 ist eine Vorrichtung zur induktiven Übertragung von elektrischer Energie bekannt, die für einen beweglichen Verbraucher wie Fahrzeugen vorgesehen ist. Zu den Vorteilen dieser Art der Energiezuführung zählen insbesondere die Verschleiss- und Wartungsfreiheit, sowie die Berührungssicherheit und eine hohe Verfügbarkeit. Aus dem Stand der Technik sind zudem induktiv arbeitende Ladegeräte für portable Kommunikationsgeräte bekannt.

### DARSTELLUNG DER ERFINDUNG

Ausgehend von diesem Stand der Technik liegt der Erfindung die Aufgabe zugrunde einen leichter zu reinigenden Trinkwasserbrunnen für Haustiere anzugeben.

Diese Aufgabe wird erfindungsgemäss mit den kennzeichnenden Merkmalen des Anspruchs 1 gelöst. Ein Trinkwasserbrunnen für Haustiere hat eine Trinkschale und einen separaten Funktionseinsatz, der eine Steuereinrichtung, eine Pumpe, eine Pumpenkreislaufleitung und ein zweites induktives Übertragungselement einer elektrischen Stromversorgung umfasst. Der Wassereinlass der Pumpenkreislaufleitung reicht in den unteren Bereich der Trinkschale. Der Wasserauslass der Pumpenkreislaufleitung ist so angeordnet, um angesaugtes Wasser aus der Trinkschale (20) in diese zurückfliessen zu lassen. Es ist mindestens ein Wasserfilter in der Pumpenkreislaufleitung angeordnet. Das erste der zwei induktiven Übertragungselemente, ist der Trinkschale zugeordnet, welches mit elektrischer Energie gespeist wird. Auf der Innenseite der Trinkschale und der Aussenseite des Funktionseinsatzes sind komplementäre Positionierungselemente vorgesehen, so dass bei einem Einsetzen des Funktionseinsatzes in die Trinkschale die beiden induktiven Übertragungselemente in einem Wirkabstand voneinander positioniert sind.

Die Positionierungselemente in der Trinkschale können nach innen ragende Rippen und in dem Funktionseinsatz komplementäre Wandbereiche und Ausnehmungen umfassen. Auch kann der Funktionseinsatz mechanisch verriegelt werden, beispielsweise durch einen Kniehebel. Bevorzugt ist aber, dass der Funktionseinsatz durch sein Eigengewicht in der Trinkschale ruht und nur gegen seitliche Verschiebungen durch die Positionierungselemente geschützt ist.

Im unteren Bereich des Funktionseinsatzes und in der unteren Wand der Trinkwasserschale können, räumlich getrennt von den induktiven Übertragungselementen alternativ oder zusätzlich komplementäre Permanentmagnete als Positionierelemente vorgesehen sein.

Der Auslass der Pumpenkreislaufleitung im Funktionseinsatz ist nach oben ausgerichtet, um eine direkte Überlauffunktion zu schaffen, gegebenenfalls bei entsprechender Pumpeneinstellung einen Wasserspeiereffekt.

Der Auslass kann auch in einer von Seitenwänden des Funktionseinsatzes gebildeten Ausnehmung als Trinkreservoir enden. Das Trinkreservoir kann man dann auch als oberen Teil einer Trinkschale oder als Zweittrinkschale für das Tier ansehen. Dabei ist es von Vorteil, wenn mindestens ein Teilabschnitt der Seitenwände für das Wasser als Überlauf in das Trinkschalenreservoir dient. Es können auch mehrere Trinkreservoire vorgesehen sein, insbesondere in Kaskadenform, wobei das Wasser immer von einem höheren in ein tieferes Trinkreservoir weiterfliesst.

Der Funktionseinsatz kann auch einen gegossenen oder gespritzten Kunststoffblock enthalten, der mit der Umgebung nur einen Einlass und einen Auslass der Pumpenkreislaufleitung aufweist und teilt. Dann sind alle elektrischen Komponenten des Funktionseinsatzes gegen die Aussenwelt verkapselt und selbst eine Wegnahme des Funktionseinsatzes führt zu keiner unsicheren Betriebsbedingung. Vielmehr kann dann in einfacher Weise die Trinkschale gesäubert werden und das darin befindliche Wasser zum Beispiel ersetzt werden.

Dem Einlass der Pumpenkreislaufleitung kann ein mechanisches Sieb als einer der besagten Wasserfilter zugeordnet sein. Dieses kann auch als Teil der Aussenwand des Funktionseinsatzes ausgestaltet sein.

In der Pumpenkreislaufleitung kann zusätzlich ein UV-Filter als einer der besagten Wasserfilter vorgesehen sein.

Ein Vorteil der Erfindung liegt auch darin, dass kein Aktivkohlefilter notwendigerweise einzubauen ist.

Die Trinkwasserschale kann auch zweiteilig ausgestaltet sein und eine zum Beispiel schwere, massive Basisplatte aufweisen, die die der Trinkwasserschale zugeordneten Positionierelemente und das erste induktive Übertragungselement aufweist, wobei die untere Wand der Trinkwasserschale eine Dicke aufweist, die zur Einhaltung des besagten Wirkabstandes zwischen den induktiven Übertragungselementen ausgestaltet ist. Dabei hat die Basisplatte auch Positionierelemente, um die Trinkwasserschale an der vorgesehenen Stelle aufzunehmen und zu halten.

Der Trinkwasserbrunnen kann über eine Solarzelle zur Stromversorgung verfügen, die an der Trinkwasserschale selber vorgesehen oder dieser zugeordnet ist. Auch kann die Trinkwasserschale und/oder der Funktionseinsatz eine Akkumulatorbatterie enthalten, um eine unterbrechungsfreie Stromversorgung zu gewährleisten.

An dem Funktionseinsatz kann mindestens ein Wasserstandsmesser vorgesehen sein.

Der Funktionseinsatz kann ein drahtloses Kommunikationsmittel für eine Signalweiterleitung von der Steuereinrichtung an ein externes Kommunikationsmittel umfassen. Ein solches drahtloses Kommunikationsmittel ist insbesondere eines nach dem Bluetooth oder WiFi-Standard. Das kann die Weitermeldung des vom Wasserstandsmessers ermittelten Wasserstandes oder die Wassertrübung durch eine im Zusammenhang mit dem UV-Filter vorgenommenen Durchlichtprüfung sein. Auch kann die Signalweiterleitung das Trinkverhalten des Tieres dokumentieren. Es können auch Signale an den Funktionseinsatz gesendet werden. Wenn dieser zusätzliche Signalgeber enthält, wie einen Vibrator, einen Akustikgeber oder ein Lichtsignal, kann bei fehlendem Wasserkonsum (entweder festgestellt durch in der Steuereinheit niedergelegte Randbedingungen oder übermittelt von dem externen Kommunikationsmittel) das Tier durch entsprechende Signale animiert werden, sich für den Trinkbrunnen zu interessieren und insbesondere kann die Pumpe entsprechend aktiviert werden, um beispielsweise das Trinkreservoir neu aufzufüllen. Das drahtlose Kommunikationsmittel kann auch dafür eingesetzt werden, die Wasserpumpe stärker oder schwächer laufen zu lassen.

Die oberen Seitenwände des Funktionseinsatzes können bis an die obere Kante der Trinkwasserschale gezogen sein, so dass zwischen dem Ende die oberen Seitenwände des Funktionseinsatzes und der oberen Kante der Trinkwasserschale nur ein Ablaufschlitz besteht und das Trinkreservoir des Brunnens neben der leicht geneigten oberen Seitenwand die einzigen Trinkgelegenheiten für das Tier bieten.

Weitere Ausführungsformen sind in den abhängigen Ansprüchen angegeben.

Ein für den Anwender praktischer Vorteil wird durch die Dreiteilung des Trinkbrunnen ins Basisplatte, Trinkschale und Technikblock in dem Funktionseinsatz erreicht. Es besteht ein modularer Aufbau zur leichten Reinigung durch Trennung der mechanisch zu reinigenden Elemente Trinkschale und Funktionseinsatzhülle von den elektrischen und elektronischen Bauteilen Basisplatte (mit induktivem Übertragungselement) und Technikblock mit Pumpe und Schaltung.

Dazu bestehen eine Vielzahl von damit unterstützten Ausbaumöglichkeiten wie Kommunikationsmöglichkeiten mit Computern, insbesondere Smartphones, auch zur Überwachung des Gesundheitszustandes der den Brunnen nutzenden Haustiere und zur Dokumentation ihres Trinkverhaltens.

Es ist klar, dass die Merkmale des Vorsehens eines drahtlosen Kommunikationsmittel in dem Funktionseinsatz für eine Signalweiterleitung von der Steuereinrichtung an ein externes Kommunikationsmittel und für eine Steuersignalweiterleitung von dem externen Kommunikationsmittel an die Steuereinrichtung auch für einen Brunnen nur nach dem Oberbegriff des Anspruchs 1 einsetzbar ist. Dazu gehören dann auch die in der vorliegenden Beschreibung erwähnten Ausbaumöglichkeiten wie die Ansteuerung der Pumpe (mehr oder weniger Pumpleistung und die Dokumentation des Trinkverhaltens mehrerer Tiere bei Erkennung von diesen über z.B. RFID Erkennungsmarken und Sensoren am Brunnen.

### KURZE BESCHREIBUNG DER ZEICHNUNGEN

Bevorzugte Ausführungsformen der Erfindung werden im Folgenden anhand der Zeichnungen beschrieben, die lediglich zur Erläuterung dienen und nicht einschränkend auszulegen sind. In den Zeichnungen zeigen:
- Fig. 1: eine schematische Zeichnung eines Trinkwasserbrunnens gemäss einem Ausführungsbeispiel der Erfindung,
- Fig. 2: eine schematische Zeichnung eines kompakten Trinkwasserbrunnens gemäss einem weiteren Ausführungsbeispiel der Erfindung,
- Fig. 3: eine schematische perspektivische Darstellung des quadratischen Trinkwasserbrunnens der Fig. 2,
- Fig. 4: eine schematische perspektivische Darstellung eines Funktionseinsatzes gemäss einem Ausführungsbeispiel der Erfindung,
- Fig. 5: eine schematische perspektivische Darstellung eines weiteren, dreieckigen Trinkbrunnens mit anderer Trinkschale, und
- Fig. 6: eine schematische perspektivische Darstellung eines weiteren, runden Trinkbrunnens mit einer Funktionseinsatz-Trinkschale als Trinkreservoir.

### BESCHREIBUNG BEVORZUGTER AUSFÜHRUNGSFORMEN

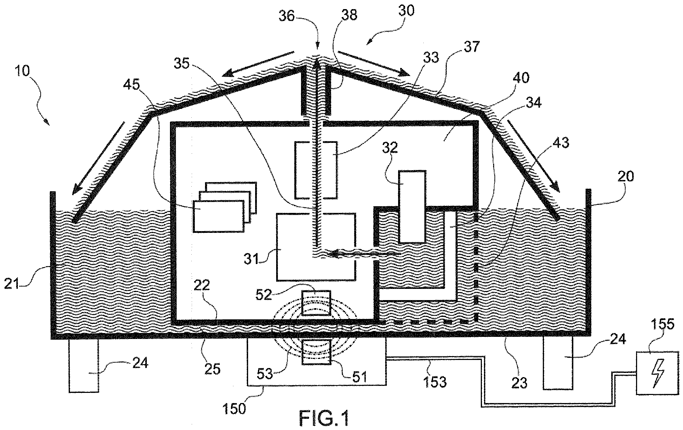

Die Fig. 1 zeigt eine schematische Zeichnung eines Trinkwasserbrunnens 10 gemäss einem Ausführungsbeispiel der Erfindung. Der Trinkwasserbrunnen 10 umfasst eine Trinkschale 20, die ein Wasserreservoir 21 beinhaltet. In die Trinkschale 20 ist ein hier zweiteiliger Funktionseinsatz 30 eingesetzt. Der Funktionseinsatz 30 umfasst einen Technikblock 40 und ein Funktionseinsatzgehäuse 38. Letzteres kann (in der Figur nicht gezeigt) durch einen Formschluss oder Kraftschluss mechanisch gegen eine Herausnahme aus der Trinkschale 20 lösbar gesichert sein. Vorteilhafterweise sind Technikblock 40 und Funktionseinsatzgehäuse 38 miteinander lösbar verbunden, zum Beispiel verrastet.

Der Funktionseinsatz 30 umfasst eine Pumpe 31 und über eine Reihe von optionalen Elementen wie einen Wasserstandsmesser 32, der in das Reservoir 21 hineinreicht, und einen UV-Filter 33. Mit dem Bezugszeichen 34 ist ein mechanischer Filter wie ein Sieb bezeichnet, welches ungelöste Fremdstoffe davon abhält in die Pumpenkreislaufleitung 35 einzutreten.

Wasser aus dem Reservoir 21 wird durch die Pumpe 31 und durch das Sieb 34 hindurch in die Pumpenkreislaufleitung 35 angesaugt, die sich im unteren Abschnitt des Funktionseinsatzes 30 befindet, um sicherzustellen, dass auch bei niedrigem Reservoirstand das vorhandene Wasser umgewälzt werden kann.

Mit dem Bezugszeichen 45 ist die elektronische Steuereinheit bezeichnet, die die Pumpe, die elektrisch zu versorgende Lampeneinheit eines UV-Filters 33, den Wasserstandsmesser 32 und allenfalls weitere Verbraucher innerhalb des Funktionseinsatzes mit Strom versorgt, Steuersignale abgibt und gegebenenfalls Messsignale (wie Wasserstand, Funktion des UV-Filters, inkl. allenfalls Messung der Trübung des Wassers) aufnimmt und mit anderen Kommunikationsgeräten wie einem Smartphone eines Benutzers zu Ansteuerungs- und Auswertungszwecken kommuniziert.

Die Pumpenkreislaufleitung 35 umfasst vorteilhafterweise einen Steigleitungsteil, um das Wasser im oberen Bereich, hier an der Spitze der Mündung 36 abzugeben. Dann fliesst das Wasser über die abwärts geneigte Ablauffläche 37 entsprechend den in der Figur dargestellten Pfeilen zurück in das Reservoir 21.

Der Funktionseinsatz 30 kann zusätzlich Kühlmodule oder Heizmodule enthalten (nicht dargestellt). Der Funktionseinsatz 30 kann an Teilen seiner Oberfläche über Solarmodulflächen verfügen und innen über eine insbesondere aufladbare Speicherbatterie, die Versorgungsausfälle kompensieren soll.

Wesentlich ist hier Verwendung von Induktion zur Stromübertragung, was den Trinkwasserbrunnen benutzerfreundlicher und auch sicherer macht. Hierfür ist an der Unterseite des Reservoirs 21 an oder in der unteren Wand 23 ein erstes induktives Übertragungselement 51 vorgesehen, dem gegenüber in dem Funktionseinsatz 30 ein komplementäres zweites induktives Übertragungselement 52 in der unteren Wand 22 angeordnet ist. Insbesondere ist ein Sockel oder Basisplatte 150 vorgesehen, in dem oder in der das erstes Übertragungselement 51 vorgesehen ist. Üblicherweise ist die Basisplatte 150 mit einem Stromkabel 153 mit einem Netzteil 155 verbunden. Alternativ kann an Stelle des Netzteils eine Steckdose, eine Batterie oder eine Solarzellenanordnung vorgesehen sein.

Dabei sind allfällige einen Formschluss oder Kraftschluss zwischen Funktionseinsatz 30 und Trinkschale 20 hervorrufende Elemente komplementär angeordnet. Insbesondere sind die beiden induktiven Übertragungselemente 51 und 52 in einem Kopplungsabstand voneinander angeordnet, der eine elektrische Leistungsübertragung 53 ermöglicht. Hier schaffen Füsse 24 an der Unterseite 23 der Trinkschale 20 einen Freiraum. Das induktive Übertragungselement 51 kann auch angesteckt werden.

Zwischen den beiden unteren Wänden 22 und 23 von Funktionseinsatz 30 beziehungsweise Trinkschale 20 kann ein Wasserspalt 25 bestehen, der meistens mindestens ein Wasserfilm ist, wenn der Funktionseinsatz 30 durch sein Eigengewicht das in der Trinkschale 20 befindliche Wasser unter seiner unteren Wand 22 im wesentlichen verdrängt.

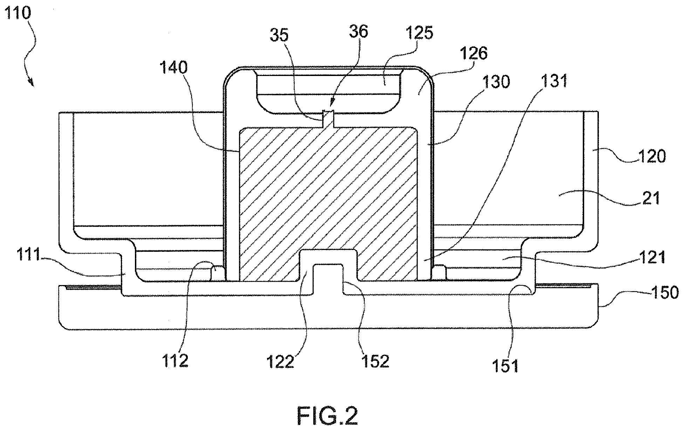

Die Fig. 2 zeigt eine schematische Zeichnung eines kompakten Trinkwasserbrunnens 110 gemäss einem weiteren Ausführungsbeispiel der Erfindung. Gleiche Merkmale sind mit gleichen, funktional ähnliche mit ähnlichen Bezugszeichen versehen.

Der Trinkwasserbrunnen 110 hat eine innere Schulter 111, die die Fläche des Reservoirbereichs 21 zu einem inneren unteren Reservoirbereich 121 verkleinert. Damit bildet sich zudem eine umlaufende Griffmulde zum Herausheben der Trinkschale 120 aus der Basisplatte 150 In der unteren Wand 23 der Trinkschale 120 sind eine Vielzahl von in den Reservoirbereich vorstehende Rippen 112 vorgesehen, deren Abstand voneinander so ausgestaltet ist, dass sie genau - mit etwas Spiel - das untere Ende der Aussenwand 131 des Funktionseinsatzes 130 und diesen gegenüber seitlichen Verschiebungen in einem Formschluss halten. Vorteilhaft ist es, wenn die aus dem Ausführungsbeispiel nach Fig. 1 bekannten Elemente Pumpe 31, Pumpenkreislaufleitung 35, die elektronische Steuereinheit 40 ggf. der UV-Filter und das zweite induktive Übertragungselement 52 in einem verschlossenen, insbesondere aus Kunststoff bestehenden gespritzten oder vergossenen Block 140 eingebunden sind, so dass nur die Einlass- und Auslassöffnung des Wasserkreislaufes mit der Umgebung verbunden sind.

Die Basisplatte 150 kann einen Netzanschluss haben oder sie kann auch eine Solarzelle oder eine Leitung zu einer solchen umfassen (nicht dargestellt). Sie weist eine Vertiefung 151 zur Aufnahme der Trinkschale 120 auf, wobei eine mittig vorgesehene Nase 152 formschlüssig in eine entsprechende Ausnehmung 122 eingreift, wobei die Nase 152 nicht nur eine quaderförmige Erhebung, sondern eine beliebige dreidimensionale Form haben kann, zu der die Ausnehmung 122 komplementär mit Spiel ausgestaltet ist. Insbesondere kann das erste induktive Übertragungselement 51 in der Nase vorgesehen sein und dann dem zweiten induktiven Übertragungselement 52 in dem vergossenen Block 140 gegenüber liegen.

Durch die Dreiteilung Basisplatte 150, Trinkschale 120 und Block 140 in dem Funktionseinsatz 130 besteht ein modularer Aufbau mit einer Vielzahl von damit unterstützten Ausbaumöglichkeiten. Diese können insbesondere die Designausgestaltung von Trinkschale 120 und Funktionseinsatz 130 betreffen, sofern nur der Formschluss mit der Basisplatte 150 und dem Einpassen des Blocks 140 in den Funktionseinsatz möglich ist. So kann, wie oben erwähnt, eine solarbetriebe Induktionsplatte als zusätzliches Modul angeboten werden, um an bestimmten Orten netzunabhängig das Wasser für das Haustier vorlegen zu können.

Bei dem Ausführungsbeispiel nach Fig. 2 ist in dem Funktionseinsatz 130 am oberen Ende eine zentrale Ausnehmung in Gestalt eines zentralen Trinkreservoir 125 vorgesehen, welches an allen vier Seiten von Wänden 126 umgeben ist und in dem mittig die Pumpenkreislaufleitung 35 mündet 36, so dass sich dieses Trinkreservoir 125 mit Wasser für das Haustier füllt, welches, wenn es vollläuft, dieses seitlich über die Seitenwände 126 abfliesst.

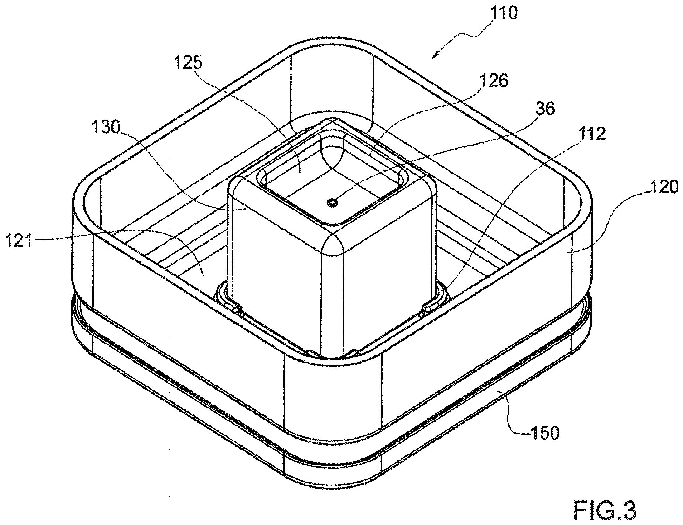

Die Fig. 3 zeigt eine schematische perspektivische Darstellung der Fig. 2. Der Funktionseinsatz 130 ist mittig in der Trinkschale 120 angeordnet und weist an seinem oberen Ende eine zentrale Ausnehmung in Gestalt des zentralen Trinkreservoir 125 auf, welches an allen vier Seiten von abgerundeten Wänden 126 umgeben ist und in dem mittig die Pumpenkreislaufleitung 35 mündet 36, so dass sich dieses Trinkreservoir 125 mit Wasser für das Haustier füllt, bevor dieses Wasser über die abgerundeten Seitenwände 126 abfliesst.

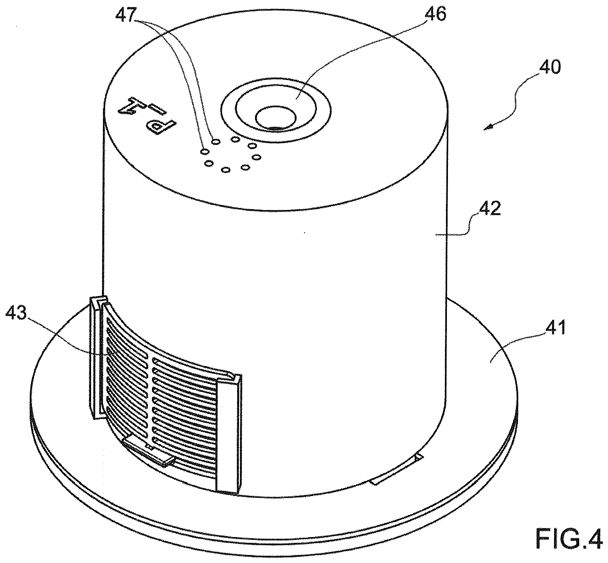

Die Fig. 4 zeigt eine schematische perspektivische Darstellung eines Technikblocks 40 eines Funktionseinsatzeses 30 gemäss einem Ausführungsbeispiel der Erfindung. Der Technikblock 40 weist eine flanschartig über den hier zylindrischen Korpus 42 überstehende Bodenplatte 41 auf. Insbesondere ist der hohlzylindrische Korpus 42 auf die Bodenplatte 41 aufgeklipst. Die Bodenplatte ermöglicht den Formschluss in einer Trinkschale nach einem der Ausführungsbeispiele. Der Technikblock 40 ist nicht abgedichtet eingesetzt, vielmehr weist er eine abnehmbare Siebplatte 43 auf, die eine mechanische Filterung vornimmt. Im Innern des Korpus 42 sind dann - in Kunststoff eingegossen oder eingespritzt, insbesondere auf der Bodenplatte 41 montiert - die elektronische Schaltung und ggf. der Wasserstandsensor und ein UV-Filter vorgesehen. Ferner endet in dem Korpus der Einlass der Pumpenkreislaufleitung 35, die über eine Pumpe mit einer Auslassmündung 46 verbunden ist. Statt dieser Überlauföffnung kann die Pumpe ausgestaltet sein, um einen Wasserstrahl nach oben zu pumpen. Mit dem Bezugszeichen 47 sind optionale Entlüftungsöffnungen bezeichnet.

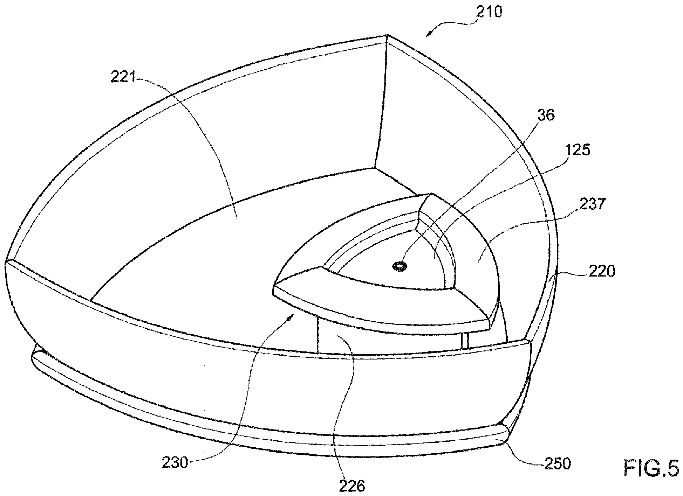

Fig. 5 zeigt eine schematische perspektivische Darstellung eines weiteren hier dreieckigen Trinkbrunnens 210 mit anderer ebenfalls dreieckiger Trinkschale 220. Der Funktionseinsatz 230 ist dezentral in der Trinkschale 220 angeordnet und weist an seinem oberen Ende eine zentrale Ausnehmung in Gestalt des zentralen Trinkreservoir 125 auf, welches an allen drei Seiten von flächig über den Korpus des Funktionseinsatzes 230 überstehenden abgerundeten Ablaufflächen 237 umgeben ist, die über die Seitenwände 226 hinausstehen und in dem mittig die Pumpenkreislaufleitung mündet 36, so dass sich zuerst dieses Trinkreservoir 125 mit Wasser für das Haustier füllt, bevor dieses über die Ablaufflächen 237 und die Seitenwände 226 abfliesst.

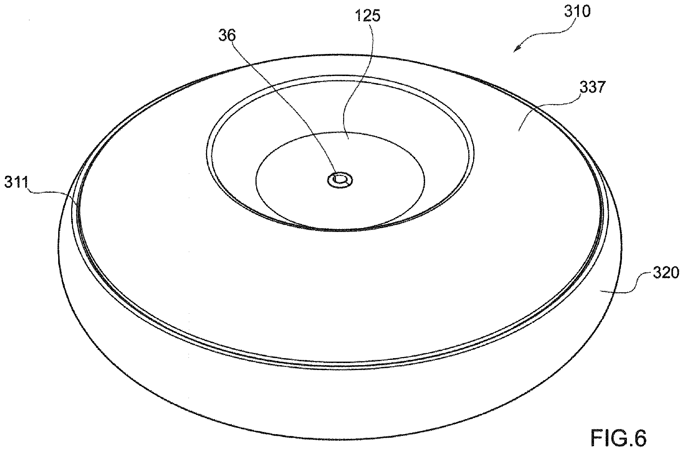

Die Fig. 6 zeigt eine schematische perspektivische Darstellung eines weiteren, runden Trinkbrunnens 310 mit einer Funktionseinsatz-Trinkschale als Trinkreservoir 125. Der Funktionseinsatz deckt die Trinkschale vollständig ab, so dass nur ein Schlitz 311 zwischen der unteren Kante der oberen runden Ablauffläche 337 und der oberen Kante der Trinkschale 320 verbleibt. Somit ist an dem oberen Ende eine zentrale Ausnehmung in Gestalt des zentralen Trinkreservoirs 125 vorgesehen, welches rundherum flächig von über den Korpus des Funktionseinsatzes überstehenden, abgerundeten Ablaufflächen 337 umgeben ist und in dem mittig die Pumpenkreislaufleitung mündet 36, so dass sich dieses Trinkreservoir 125 mit Wasser für das Haustier füllt, bevor dieses, wenn es voll ist, über die Ablaufflächen 337 durch den Schlitz 311 über die (unter dem Schlitz bestehenden und in der Fig. 6 nicht sichtbaren) Seitenwände abfliesst.

Die Funktion des Trinkbrunnens kann insbesondere durch Schwimmschalter gesteuert werden, die den Wasserstand zwischen zwei Füllständen aufzeigen. Bevor das Tier trinkt, läuft die Pumpe und der UV-Wasserfilter, zumindest zeitlich teilweise; ggf. auch in zeitlich voreingestellten Abständen. Wenn das Tier trinkt, sinkt der Wasserstand im Trinkreservoir 125. Wenn der Wasserstand unter einen vorbestimmten Pegel gesunken ist, wird die Pumpe 31 und/oder der UV-Filter 33 nicht mehr angeschaltet und eine Anzeige wird getriggert. Das kann eine visuelle oder eine akustische Anzeige sein. Auch kann ein Signal an ein elektronisches Gerät weitergeleitet werden, beispielsweise über eine WLAN- oder Bluetooth-Verbindung, um den Besitzer anzuhalten, Wasser nachzufüllen.

Damit ist dann auch die (zukünftige) Auswertung des Trinkverhaltens eines Tieres möglich. Wenn im Rahmen der elektronischen Steuerschaltung in einer Ausbaustufe auch ein RFID-Leser vorhanden ist und beispielsweise verschiedene Tiere mit einem sie identifizierenden RFID-Chip markiert sind, so kann eine Auswertung des Trinkverhaltens über mehrere Tiere am gleichen Brunnen vorgenommen werden. Über die Kommunikationseinrichtung ist es dem Benutzer möglich, die von der Pumpe geförderte Wassermenge einzustellen.

Die Ausführungsbeispiele zeigen unterschiedliche Trinkmöglichkeiten. Bei dem Ausführungsbeispiel nach Fig. 1 muss das Tier das über die ablaufenden Seitenwände abfliessende Wasser aufnehmen. Der Schlitz zwischen der Wand und der Seitenwand der Trinkschale 20 kann schmal sein. Bei der Ausführung nach Fig. 2 bzw. Fig. 3 kann das Tier zwischen dem frisch sprudelnden Wasser aus der Mündung 36 und dem zentralen Trinkreservoir 125 und der umgebenden Schale wählen. Die Verkleinerung des unteren Schalenvolumens durch die Schulter 111 gestattet eine längere Standzeit, da auch bei kleinen Restvolumina an Wasser das Trinkreservoir 125 noch gefüllt werden kann, da der der Anschlagpegel des unteren Wasserstandsmessers sich auf ein sehr tiefes Niveau bezieht. Bei dem Ausführungsbeispiel nach Fig. 5 hat das Tier durch die asymmetrische Anordnung des Funktionseinsatzes die Wahl, das im Trinkreservoir 125 angepumpte Wasser oder das über die ablaufenden Seitenwände abfliessende Wasser aus der Trinkschale 230 aufzunehmen. Die Fig. 6 schliesslich ist recht geschlossen und das Tier muss aus dem Trinkreservoir 125 trinken oder das über die Wände abfliessende Wasser aufnehmen, der Boden der Trinkschale ist für das Tier nicht erreichbar.

**BEZUGSZEICHENLISTE**

| | | | |
|---|---|---|---|
| 10 | Trinkwasserbrunnen | 110 | Trinkwasserbrunnen |
| 20 | Trinkschale | 111 | innere Schulter |
| 21 | Wasser/ Wasserreservoir | 112 | Rippen |
| 22 | untere Wand | 120 | Trinkschale |
| 23 | untere Wand | 121 | innerer unterer |
| 24 | Fuss | | Reservoirbereich |
| 25 | Wasserspalt / Wasserfilm | 122 | Ausnehmung |
| 30 | Funktionseinsatz | 125 | zentrales Trinkreservoir |
| 31 | Pumpe | 126 | Seitenwände |
| 32 | Wasserstandsmesser | 130 | Funktionseinsatz |
| 33 | UV-Filter | 131 | Seitenwand |
| 34 | mechanischer Filter / Sieb | 140 | vergossener Block |
| 35 | Pumpenkreislaufleitung | 150 | Basisplatte |
| 36 | Mündung | 151 | Vertiefung |
| 37 | Ablauffläche | 152 | Nase |
| 38 | Funktionseinsatzgehäuse | 153 | Stromkabel |
| 40 | Technikblock | 155 | Netzteil |
| 41 | Bodenplatte | 210 | Trinkwasserbrunnen |
| 42 | Korpus | 220 | Trinkschale |
| 43 | mechanisches Sieb | 221 | Wasserreservoir |
| 45 | elektronische Steuereinheit | 226 | Seitenwand |
| 46 | Auslassmündung | 237 | Ablauffläche |
| 47 | Entlüftungsöffnungen | 230 | Funktionseinsatz |
| 51 | erstes induktives | 250 | Basisplatte |
| | Übertragungselement | 310 | Trinkwasserbrunnen |
| 52 | zweites induktives | 311 | Schlitz |
| | Übertragungselement | 320 | Trinkschale |
| 53 | elektrische Leistungsübertragung | 337 | Ablauffläche |

## Patentansprüche

1. Trinkwasserbrunnen (10, 110, 210, 310) für Haustiere mit einer Trinkschale (20; 120, 220, 320), einer Steuereinrichtung (45) und einer Pumpe (31), wobei ein Wassereinlass einer Pumpenkreislaufleitung (35) in den unteren Bereich der Trinkschale (20, 120, 220, 320) reicht und ein Wasserauslass (36) der Pumpenkreislaufleitung (35) angeordnet ist, um angesaugtes Wasser aus der Trinkschale (20, 120, 220, 320) in diese zurückfliessen zu lassen, wobei mindestens ein Wasserfilter (33, 34, 43) in der Pumpenkreislaufleitung (35) angeordnet ist und wobei eine elektrische Stromversorgung vorgesehen ist, um mindestens die Steuereinrichtung (45) und die Pumpe (31) mit elektrischer Energie zu versorgen, **dadurch gekennzeichnet, dass** die elektrische Stromversorgung über zwei induktive Übertragungselemente (51, 52) verfügt, dass der Trinkschale (20, 120, 220, 320) das erste induktive Übertragungselement (51) zugeordnet ist, welches mit elektrischer Energie gespeist wird, und dass ein Funktionseinsatz (30, 130, 230) vorgesehen ist, der mindestens die Steuereinrichtung (45), die Pumpe (31), die Pumpenkreislaufleitung (35) und das zweite induktive Übertragungselement (52) umfasst, dass auf der Innenseite der Trinkschale (20, 120, 220, 320) und der Aussenseite des Funktionseinsatzes (30, 130, 230) komplementäre Positionierungselemente (122, 112) vorgesehen sind, so dass bei einem Einsetzen des Funktionseinsatzes (30, 130, 230) in die Trinkschale (20, 120, 220, 320) die beiden induktiven Übertragungselemente (51, 52) in einem Wirkabstand (53) voneinander positioniert sind.

2. Trinkwasserbrunnen (10, 110, 210, 310) nach Anspruch 1, **dadurch gekennzeichnet, dass** die Positionierungselemente (122, 112) in der Trinkschale (20, 120, 220, 320) nach innen ragende Rippen (112) und in dem Funktionseinsatz (30, 130, 230) komplementäre Wandbereiche (131) und Ausnehmungen umfassen.

3. Trinkwasserbrunnen (10, 110, 210, 310) nach Anspruch 1 oder 2, **dadurch gekennzeichnet, dass** der Auslass (36) der Pumpenkreislaufleitung (35) im Funktionseinsatz (30, 130, 230) nach oben ausgerichtet ist.

4. Trinkwasserbrunnen (10, 110, 210, 310) nach Anspruch 3, **dadurch gekennzeichnet, dass** der Auslass in einer von Seitenwänden (126, 226, 326) des Funktionseinsatzes (130, 230) gebildeten Ausnehmung als Trinkreservoir (125) endet und dass mindestens ein Teilabschnitt der Seitenwände (126, 226, 326) für das Wasser als Überlauf in die als Auffangschale dienende Trinkschale (120) dienen.

5. Trinkwasserbrunnen (10, 110, 210, 310) nach einem der Ansprüche 1 bis 4, **dadurch gekennzeichnet, dass** der Funktionseinsatz (30, 130, 230) einen lösbar zusammengesetzten Technikblock (40) oder einen gegossenen oder gespritzten Kunststoffblock (140) enthält, der mit der Umgebung optional nur einen Einlass und einen Auslass (36) der Pumpenkreislaufleitung (35) aufweist.

6. Trinkwasserbrunnen (10, 110, 210, 310) nach einem der Ansprüche 1 bis 5, **dadurch gekennzeichnet, dass** dem Einlass der Pumpenkreislaufleitung (35) ein mechanisches Sieb (43) als einer der besagten Wasserfilter zugeordnet ist.

7. Trinkwasserbrunnen (10, 110, 210, 310) nach einem der Ansprüche 1 bis 6, **dadurch gekennzeichnet, dass** in der Pumpenkreislaufleitung (35) ein UV-Filter (33) als einer der besagten Wasserfilter vorgesehen ist.

8. Trinkwasserbrunnen (10, 110, 210, 310) nach einem der Ansprüche 1 bis 7, **dadurch gekennzeichnet, dass** die Trinkwasserschale (120, 220, 320) zweiteilig ist und eine Basisplatte (150) aufweist, die die der Trinkwasserschale (120, 220, 320) zugeordneten Positionierelemente und das erste induktive Übertragungselement (51) aufweist, wobei die untere Wand der Trinkwasserschale (120, 220, 320) eine Dicke aufweist, die zur Einhaltung des besagten Wirkabstandes zwischen den induktiven Übertragungselementen (51, 52) ausgestaltet ist.

9. Trinkwasserbrunnen (10, 110, 210, 310) nach einem der Ansprüche 1 bis 8, **dadurch gekennzeichnet, dass** er über eine Solarzelle zur Stromversorgung verfügt, die an der Trinkwasserschale (20, 120, 220, 320) vorgesehen oder dieser zugeordnet ist.

10. Trinkwasserbrunnen (10, 110, 210, 310) nach einem der Ansprüche 1 bis 9, **dadurch gekennzeichnet, dass** an dem Funktionseinsatz (30, 130, 230) ein Wasserstandsmesser (32) vorgesehen ist.

11. Trinkwasserbrunnen (10, 110, 210, 310) nach einem der Ansprüche 1 bis 10, **dadurch gekennzeichnet, dass** im unteren Bereich des Funktionseinsatzes (30, 130, 230) und in der unteren Wand der Trinkwasserschale (20, 120, 220, 320), räumlich getrennt von den induktiven Übertragungselementen (51, 52) komplementäre Permanentmagnete als Positionierelemente vorgesehen sind.

12. Trinkwasserbrunnen (10, 110, 210, 310) nach einem der Ansprüche 1 bis 11, **dadurch gekennzeichnet, dass** der Funktionseinsatz (30, 130, 230) ein drahtloses Kommunikationsmittel für eine Signalweiterleitung von der Steuereinrichtung (45) an ein externes Kommunikationsmittel und für eine Steuersignalweiterleitung von dem externen Kommunikationsmittel an die Steuereinrichtung umfasst.

13. Trinkwasserbrunnen (10, 110, 210, 310) nach einem der Ansprüche 1 bis 12, **dadurch gekennzeichnet, dass** die oberen Ablaufflächen (337) des Funktionseinsatzes bis an die obere Kante der Trinkwasserschale (320) gezogen sind, so dass zwischen dem Ende der oberen Ablaufflächen (337) des Funktionseinsatzes und der oberen Kante der Trinkwasserschale (320) nur ein Ablaufschlitz (311) besteht.
